(19) Europäisches Patentamt
European Patent Office
Office européen des brevets

(11) EP 4 520 784 B1

(12) **EUROPEAN PATENT SPECIFICATION**

(45) Date of publication and mention of the grant of the patent:
**18.03.2026 Bulletin 2026/12**

(21) Application number: **23382922.5**

(22) Date of filing: **11.09.2023**

(51) International Patent Classification (IPC):
***C08L 7/00*** *(2006.01)*

(52) Cooperative Patent Classification (CPC):
(C-Sets available)
**C08L 7/00; C08C 19/04; C08C 19/22** (Cont.)

# (54) METHOD FOR OBTAINING A SELF-REPAIRING NATURAL RUBBER, MATERIAL THUS OBTAINED AND USE THEREOF

VERFAHREN ZUR HERSTELLUNG EINES SELBSTREPARIERENDEN NATURKAUTSCHUKES, SO ERHALTENER WERKSTOFF UND SEINE VERWENDUNG

PROCÉDÉ D'OBTENTION D'UN CAOUTCHOUC NATUREL AUTORÉPARATEUR, MATÉRIAU AINSI OBTENU ET SON UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**12.03.2025 Bulletin 2025/11**

(73) Proprietors:
- **Consejo Superior De Investigaciones Científicas 28006 Madrid (ES)**
- **Bridgestone Corporation Chuo-Ku Tokyo 104-8340 (JP)**

(72) Inventors:
- **Hernández Santana, Marianella Madrid (ES)**
- **Verdejo Márquez, Raquel Madrid (ES)**
- **López Manchado, Miguel Ángel Madrid (ES)**
- **Utrera Barrios, Saul Madrid (ES)**

(74) Representative: **Marks & Clerk LLP**
**15 Fetter Lane**
**London EC4A 1BW (GB)**

(56) References cited:
- **DATABASE WPI Week 2020073, Derwent World Patents Index; AN 2020-72449U, XP002810909**
- **MYRIAM PIRE ET AL: "Imidazole-promoted acceleration of crosslinking in epoxidized natural rubber/dicarboxylic acid blends", vol. 52, no. 23, 27 October 2011 (2011-10-27), pages 5243 - 5249, XP002698721, ISSN: 0032-3861, Retrieved from the Internet <URL:http://www.sciencedirect.com/science/article/pii/S0032386111007853> [retrieved on 20110922], DOI: 10.1016/J.POLYMER.2011.09.032**
- **ALGAILY BASHIR ET AL: "Enabling reprocessability of ENR-based vulcanisates by thermochemically exchangeable ester crosslinks", PLASTICS, RUBBER & COMPOSITES: MACROMOLECULAR ENGINEERING, vol. 50, no. 7, 1 April 2021 (2021-04-01), GB, pages 315 - 328, XP093124960, ISSN: 1465-8011, DOI: 10.1080/14658011.2021.1896093**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 15/00, C08K 3/06, C08K 3/22, C08K 5/098, C08K 5/47, C08K 5/3415**

## Description

The invention relates to a method for obtaining a self-repairing natural rubber, which is useful in the automotive industry, specifically in the manufacturing of tires and conveyor belts, but not limited to.

## BACKGROUND ART

Tires, vital for vehicle safety and performance, are products made from a combination of natural and synthetic rubber, along with other materials, to fulfill specific purposes. Their complex composition, combined with the increasing demand, creates significant waste management challenges (Araujo-Morera, J.; Verdejo, R.; López-Manchado, M.A.; Santana, M.H. Sustainable Mobility: The Route of Tires through the Circular Economy Model. Waste Management 2021, 126, 309-322).

With world tire production reaching 17.1 million tons in 2018 (according to the International Rubber Study Group), the rise in end-of-life tires (ELT) represents an environmental thread. But rubbers are not only in tires, they are also found in multiple applications such as seals, gaskets, hoses, clothing, medical devices, toys, sporting goods, among others. In this context, managing rubber waste has become a primary concern. However, despite the global effort to build a circular economy, a significant percentage of rubber products still ends up as waste.

Against this backdrop, developing self-repairing rubbers for rubber production could play a crucial role. By enhancing product longevity, the number of rubber waste may decrease, thus mitigating the associated environmental and health challenges.

Self-repair (or self-healing) refers to a material's capability to mend itself and regain its structural and functional integrity either autonomously or in response to external stimuli (Wang, S.; Urban, M.W. Self-Healing Polymers. Nat Rev Mater 2020, 5, 562-583).

In the field of rubbers, strategies based on dynamic bonds, or supramolecular (reversible) interactions are used to achieve self-repair. Some of these are disulfide exchange, ionic interactions, Diels-Alder reactions, metal-ligand coordination, hydrogen bonds, among others (Utrera-Barrios, S., Verdejo, R., Lopez-Manchado, M. A., & Hernández Santana, M. Evolution of self-healing elastomers, from extrinsic to combined intrinsic mechanisms: A review. Materials Horizons, 2020, 7(11), 2882-2902). However, the mere incorporation of these bonds into the rubber structure is no guarantee of self-repair. There are other factors to optimize.

For example, some self-repairing rubbers, with sulfur-based (Araujo-Morera, J.; López-Manchado, M.A.; Verdejo, R.; Hernández Santana, M. Unravelling the Effect of Healing Conditions and Vulcanizing Additives on the Healing Performance of Rubber Networks. Polymer (Guildf) 2022, 238, 124399), ionic based systems (Miwa, Y.; Kurachi, J.; Sugino, Y.; Udagawa, T.; Kutsumizu, S. Toward Strong Self-Healing Polyisoprene Elastomers with Dynamic Ionic Crosslinks. Soft Matter 2020, 16, 3384-3394) and combination between them (Zhou, X.; Wang, H.; Li, S.; Liu, M. Synthesis and Application of Self-Healing Elastomers with High Healing Efficiency and Mechanical Properties Based on Multi-Healing Systems. Eur Polym J 2021, 159, 110769), have been described in the state of the art. Nevertheless, said self-repairing rubbers need improvements to meet the requirements of demanding applications such as tires while achieving high self-healing capabilities. To illustrate, sulfur-based systems exhibit good mechanical performance; however, the optimal healing conditions for the disulfide exchange reactions to take place require high temperatures and/or high times that compromise the stability of the material. Ionic based systems (vulcanized at the optimal curing time, t90) exhibit excellent mechanical behavior, but often have low elastic properties, which is solved by adding a covalent crosslinking agent, such as peroxides. However, the presence of a peroxide in the recipes generates the appearance of a secondary non-dynamic covalent network that hinders the healing capacity.

This highlights the need to reach a compromise between mechanical performance and self-healing capacity, typically antagonistic properties.

To solve these issues in the field of self-repairing rubbers, the present invention discloses a novel method that allows to obtain a self-repairing natural rubber with good mechanical properties.

## SUMMARY OF THE INVENTION

The present invention discloses a novel method for obtaining a self-repairing natural rubber through the formation of dual crosslinking networks based on disulfide exchange and Diels-Alder (DA) reactions. This self-repairing natural rubber presents optimum properties regarding tensile mechanical performance and self-healing efficiency.

A novel two-stage route in bulk was followed to obtain the self-repairing natural rubber. In the first stage, a blend between natural rubber (NR) and epoxidized natural rubber (ENR) was functionalized with furan groups (dienes). Furoic acid (FA) and dimethylimidazole (DMI) were used for this purpose. According to the available literature, the epoxy ring of ENR can react with the carboxylic groups of FA in the presence of DMI (Pire, M.; Oikonomou, E.K.; Imbernon, L.; Lorthioir, C.; Iliopoulos, I.; Norvez, S. Crosslinking of Epoxidized Natural Rubber by Dicarboxylic Acids: An Alternative to Standard

Vulcanization. Macromol Symp 2013, 331-332, 89-96). This reaction allows to graft the furan groups to the rubber chain. These furan groups would serve as a moiety for a Diels-Alder (DA) reaction. In the second stage, the above system comprising furans is mixed with additives corresponding to a regular sulfur (S) vulcanization (*i.e.,* sulfur (S), zinc oxide (ZnO), stearic acid (SA) and n-cyclohexyl-2-benzothiazolsulfenamide (CBS) as accelerant) with a bismaleimide (BMI). The BMI was selected as a dienophile for completing the DA reaction.

Then, a first aspect of the invention relates to a method for obtaining a self-repairing natural rubber (the method of the present invention) comprising the next mixing steps:

a) treating a blend of NR and ENR rubber with FA and DMI to functionalize the ENR with furan groups and
b) the blend obtained in step a) is treated with the following S vulcanization additives: S, ZnO, SA and CBS, and BMI, to obtain the unvulcanized self-repairing natural rubber.

The term "natural rubber" (NR) covers any polyisoprene derived from a NR latex, obtained from the Hevea Brasiliensis tree, regardless of its macrostructure. NR is commercially available.

The NR can be represented by the formula:

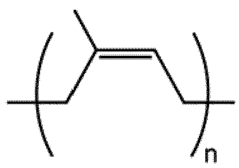

wherein n is a variable integer that represents the number of monomers in the polymer. It could be about 10,000 in NR.

The term "epoxidized natural rubber" (ENR) refers to the functionalized variant of NR in which epoxy groups are introduced into its chemical structure, through a reaction with a peracid. Commercial epoxidation degree typically ranges from 25 mol % to 50 mol % (ENR is commercially available).

Then, the ENR is a random polymer of formula:

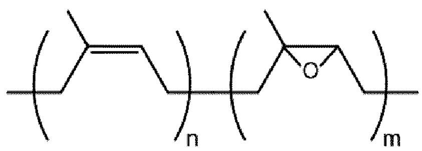

wherein n is a variable integer that represents the number of non-epoxidized units and m represents the number of epoxidized units in the polymer. Non-epoxidized and epoxidized units are bonded at random. The sum of n and m could be about 10,000.

Preferably, the degree of epoxidation in the ENR ranges from 25 mol % to 50 mol % and, more preferably, is 50 mol % (ENR 50: half of the units are epoxidized).

Steps a) and b) are carried out in absence of solvent, that is, in solid state.

Preferably, the step a) is carried out in an internal mixer and/or step b) in a two-roll mill.

In a preferred embodiment, the weight ratio NR:ENR used in step a) is 1:1.

In a preferred embodiment, step a) is carried out at a temperature between 100 and 130 °C and/or for 12 to 25 min. More preferably, at 100 °C for 25 min.

In a preferred embodiment the stochiometric ratio of furoic acid and dimethylimidazole in step a) is 1:1.

In a preferred embodiment, in step a) 1 unit (molecule) of furoic acid is used per 25 to 50 epoxy units. More preferably, 1 unit of furoic acid is used per 25 epoxy units. The content of epoxy units in the ENR is provided by the manufacturer (as ENR is commercially available). Then, by simple stoichiometry the amount in each material is known.

In a preferred embodiment, step b) is carried out at room temperature (18 - 25 °C) and, preferably, for 15 to 20 min, more preferably, for 15 min.

In a preferred embodiment, the BMI is used in a stochiometric ratio 2:1 FA:BMI.

In a preferred embodiment, the proportion of S, ZnO, SA and CBS used is: 1.25, 5, 2 and 2.50 parts per hundred rubbers (phr), respectively. Parts per hundred rubber (phr) provides the weight of additives per 100 weight units of the base rubber.

The method of the present invention also is characterized because no fillers are used or added to the reaction blends. As known in the state of the art, fillers are compounds that can be used in a rubber recipe to increase the mechanical performance (reinforcing fillers) or reduce cost (diluent fillers). Examples of such fillers are carbon black, silica, calcium carbonate, talc, among others (Brydson, J.A. Rubbery Materials and Their Compounds; Springer, 1988).

However, the present invention allows the obtention of a rubber with optimum mechanical performance without the use of fillers.

After completing mixing step b), the rubber obtained needs to be vulcanized to be further used. Then, in a preferred embodiment, the method of the invention comprises a step c) of vulcanization of the rubber obtained in step b). Vulcanization is preferably performed by compression molding in a hydraulic press at 100-300 bar pressure, preferably 200 bar pressure, at 160 °C. The optimum curing time for the vulcanization (t90) was determined by the curing curves of each compound.

Curing curves were obtained using a rheometer for rubber analysis (MDR 2000, Monsanto, with a 0.5° oscillation arc and 1.7 Hz frequency for 120 min). From the curves obtained, t90 was determined, which is defined as the time to reach 90% of the maximum torque of the curing curves. Said t90 was used as the optimal cure time for the vulcanization.

Then, in a more preferred embodiment, vulcanization is performed by compression molding in a hydraulic press at 200 bar pressure and 160 °C for t90 time.

If the self-repairing natural rubber matrix obtained in the method of the invention needs to be repaired after damage, the process of the self-repairing or self-healing comprises heating the self-repairing natural rubber at 160 °C for 1 h and 200 bar pressure following by heating at 90 °C for 12 h and 200 bar pressure.

According to the state of the art (Utrera-Barrios, S.; Verdejo, R.; López-Manchado, M.Á.; Hernández Santana, M. The Final Frontier of Sustainable Materials: Current Developments in Self-Healing Elastomers. Int J Mol Sci 2022, 23, 4757), three conditions are necessary to achieve self-healing in crosslinked systems:

- Dynamic (reversible) but stable networks at room temperature that guarantee high mechanical performance under standard service conditions.
- A minimum amount of non-dynamic nets, if not totally avoidable. In this way the flow necessary to achieve self-healing would be guaranteed.
- An absolute compatibility between the self-healing conditions of the networks, in addition to the stability of the material.

The best dual system based on DA chemistry and disulfide exchange manages to meet all the three conditions mentioned above, exceeding 5 MPa and 70% healing efficiency of tensile mechanical properties.

Other aspect of the present invention relates to the self-repairing natural rubber obtained by the method of the present invention, which uses NR and ENR rubber as starting materials with a dual cross-linking system based on disulfide bonds (-S-S-) and other covalent bonds resulting from the Diels-Alder reactions between the furans (with which the ENR has been previously functionalized) and bismaleimides.

The last aspect of the present invention relates to the use of the self-repairing or natural rubber obtained by the method of the present invention in the automotive industry, specifically for the manufacturing of tires and conveyor belts, but not limited to.

In summary, a new solid-state mixing procedure has been developed for obtaining a self-repairing natural rubber through the formation of dual crosslinking networks based on disulfide bonds and other covalent bonds obtained by Diels-Alder reactions.

Some of the advantages of the present invention are indicated below and demonstrated in the examples of the present invention:

- A novel two-stage mixing route in bulk is proposed. Conventional rubber mixing equipment is used (internal mixer and two-roll mill). Thus, there is no need for using specific equipment.
- Diels-Alder chemistry is usually done in solution. However, the present invention does not use solvents, the mixing method is in solid-state.
- Dual crosslinked rubber formed by disulfide and Diels-Alder bonds exhibits better mechanical performance than single sulfur-based network compounds consisting of semi-efficient single sulfur system (SEV). Dual compounds far exceed 5 MPa without the use of reinforcing fillers.
- Dual crosslinked rubber formed by disulfide and Diels-Alder bonds exhibits healing capability with no detriment on mechanical behaviour. Healing efficiencies higher than 70% are achieved, based on the recovery of stress at 100% elongation (M100), tensile strength (TS) and elongation at break (EB).
- Dual crosslinked rubber formed by disulfide and Diels-Alder bonds exhibits dynamic but stable networks at room temperature that guarantee high mechanical performance under standard service conditions.
- Dual crosslinked rubber formed by disulfide and Diels-Alder bonds exhibits the flow necessary to achieve self-healing.
- Dual crosslinked rubber formed by disulfide and Diels-Alder bonds exhibits an absolute compatibility between the self-healing conditions of the networks, in addition to the stability of the material.

Unless otherwise defined, all technical and scientific terms used herein have the same meaning as commonly understood by one of ordinary skilled in the art to which this invention belongs. Methods and materials similar or equivalent

to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

## DESCRIPTION OF THE DRAWINGS

**Fig. 1.** Scheme of the dual crosslinking strategy based on DA chemistry and disulfide bonds.
**Fig.** 2. Scheme of the mixing protocol of reactants, according to example 1.
**Fig. 1.** Attenuated total reflection (ATR) spectra of unvulcanized (UV) and vulcanized (V) DA1 compound.
**Fig. 4.** Scheme of the healing protocol of dual compounds based on DA chemistry and disulfide network.
**Fig.** 5. Optical photography of damaged and healed (with new break zone) sample of the dual compound DA5.
**Fig. 6.** Stress-strain curves for compared compounds of Example 2.

## EXAMPLES

**EXAMPLE 1:** Obtention of self-repairing natural rubber

### Materials

NR, SOG 10, supplied by Bridgestone, was selected as natural rubber matrix. ENR 50 from Ekoprena was also used. Several NR/ENR-based recipes were designed with a single vulcanization system based on Diels-Alder (DA) chemistry and a dual system combining DA chemistry with a sulfur-based system.

For the preparation of the DA-based network, a novel two-stage mixing route in bulk was followed. In the first stage, the NR/ENR matrix was functionalized with furan groups (dienes). Furoic acid (FA) and dimethylimidazole (DMI) (from Merck) were used for this purpose. According to the available literature, the epoxy ring of ENR can react with the carboxylic groups of FA in the presence of DMI (Pire, M.; Oikonomou, E.K.; Imbernon, L.; Lorthioir, C.; Iliopoulos, I.; Norvez, S. Crosslinking of Epoxidized Natural Rubber by Dicarboxylic Acids: An Alternative to Standard Vulcanization. Macromol Symp 2013, 331-332, 89-96). This reaction allows to graft the furan groups to the rubber chain. These furan groups would serve as a moiety for the DA reaction. In the second stage, the above system was mixed with a bismaleimide (BMI), from Merck and other additives corresponding to a regular sulfur (S) vulcanization (i.e., S, from Merck; ZnO, from Scharlau; SA, from Alfa Aesar; and CBS, from Carbosynth Limited). The BMI was selected as a dienophile for completing the DA reaction. The scheme of the dual crosslinking strategy is shown in Figure 1. The recipes designed are shown in Table 1.

Table 1. Compounds recipes in phr

| Ingredients | CAS number | DA1[2] | DA4[2] | DA5[2] |
|---|---|---|---|---|
| NR (SOG 10) | - | 50 | 50 | 50 |
| ENR 50 | - | 50 | 50 | 50 |
| ZnO | 1314-13-2 | 0 | 5 | 5 |
| SA | 57-11-4 | 0 | 2 | 2 |
| CBS | 95-33-0 | 0 | 2.50 | 2.50 |
| S | 7704-34-9 | 0 | 1.25 | 1.25 |
| FA[1] | 88-14-2 | 1.47 | 1.47 | 2.94 |
| DMI[1] | 1739-84-0 | 1.26 | 1.26 | 2.52 |
| BMI[1] | 13676-54-5 | 2.35 | 2.35 | 4.70 |

Notes:
[1] An FA:BMI stochiometric ratio of 2:1 and an FA:DMI stochiometric ratio of 1:1 were used for all systems.
[2] In DA1 and DA4, a ratio of 1 FA per 100 ENR 50 monomer was used, *i.e.,* 1 FA per 50 epoxy units. While in DA5 the ratio was doubled to 1 FA for every 50 monomer of ENR 50, *i.e.,* 1 FA for every 25 epoxy units.

## Processing of compounds

The processing of the compounds was carried out in two stages in bulk state (according to the strategy in Figure 1). The first mixing stage was performed in an internal mixer. Two times "M" (A: 12 min, B: 25 min) and two temperatures "X" (A: 100 °C, B: 130 °C) were used to evaluate the influence of both properties in the furan grafting. These initial blends were denoted as AA, AB, BA and BB, according to the time and temperature used for the mixing of the ingredients. Mixing during 25 min at 100 °C (BA) results in the optimum combination for the DA reaction. The second stage of the mixing was performed in a two-roll mill, at room temperature and with a friction ratio (the speed ratio at which the mixer rollers rotate) of 1:1.15. The schemes of each stage are shown in Figure 2.

Curing curves were determined using a moving die rheometer (MDR 2000, Monsanto) with a 0.5° oscillation arc and 1.7 Hz frequency for 120 min. Vulcanization was performed by compression molding in a hydraulic press at 200 bar pressure during the optimum curing time (t90) determined by the curing curves of each compound at 160 °C (for compounds with S) and 90 °C (for compounds without S).

## Results

*Infrared spectra*

The formation of the Diels-Alder adduct was confirmed by infrared (IR) spectroscopy. IR spectra were obtained directly on unvulcanized (UV) and vulcanized (V) samples of DA1 AA using the ATR mode. A wavenumber scan was made from 450 $cm^{-1}$ to 4000 $cm^{-1}$ with a resolution of 4 $cm^{-1}$ and co-adding 4 scans per spectrum in a spectrometer Spectrum Two, from PerkinElmer. The spectra are shown in Fig. ***3.***

The success of the DA reaction is evidenced by two signals:

- The first at 1180 $cm^{-1}$ corresponding to the DA adduct,
- The second at 1717 $cm^{-1}$ corresponding to the bicyclic character of the DA adduct formed between furan and bismaleimide moieties.

*Mechanical properties*

Table 2 shows the mechanical properties of the dual compounds.

Table 2. Mechanical properties (by tensile test) of dual compounds.

| Compound | **Stress at 100% elongation, M100** (MPa) | **Stress at 300% elongation, M300** (MPa) | **Tensile strength, TS[1]** (MPa) | **Elongation at break, EB[1]** (%) |
|---|---|---|---|---|
| DA4 | 0.39 ± 0.03 | 1.04 ± 0.03 | 7.6 ± 0.7 | 1114 ± 57 |
| DA5 | 0.9 ± 0.2 | 2.3 ± 0.3 | 8.5 ± 0.7 | 875 ± 94 |

Notes:
[1] TS and EB were calculated according to UNE-ISO 37:2013.

An increase in the amount of DA ingredients, increases the mechanical behavior of the dual compounds (DA5 have higher TS than DA4)

Key result: development of a dual network (disulfide bonds + Diels-Alder chemistry) NR compound (DA5) with outstanding mechanical behavior without the need of fillers.

*Optimization of self-repairing protocol*

Due to the nature of the dual network, two temperatures were required for guaranteeing the repairability of the sulfur and DA networks:

- First, 160 °C based on the best healing condition for the disulfide exchange to take place,
- Second, 90 °C based on the optimum temperature for the DA reaction to take place.

It is important to emphasize the need to choose a mold with the proper geometry. The dimensions of the mold must take into consideration the shrinkage of the rubber, if vulcanized directly on it. A mold that guarantees the correct

distribution of the pressure (200 bar) on all faces of the specimen would be necessary to ensure high self-heling efficiencies.

The self-healing efficiency was calculated according to the equation (1):

$$\eta(\%) = \frac{P_{healed} - P_{damaged}}{P_{pristine} - P_{damaged}} 100 = \frac{P_{healed}}{P_{pristine}} 100 \qquad \text{Equation 1}$$

where P is a selected property before healing ($P_{pristine}$), after damage ($P_{damaged}$), and after the healing ($P_{reated}$). As the serious damage of cutting a sample in two pieces leads to a loss of property after damage ($P_{damage}$ = 0), the equation can be simplified into the ratio between the property before and after the healing protocol.

A scheme of the conditions for the healing protocol is shown in figure 4. The results for each condition are shown in Table 3.

Table 3. Self-healing efficiency of dual compounds.

| Compound | Healing efficiency (%) | | |
|---|---|---|---|
| **Condition 1: 160 ºC - 1 h + 90 ºC - 1 h** | | | |
| Compound | M100 | TS | EB |
| DA4 | 71 ± 7 | 51 ± 18 | 74 ± 18 |
| DA5 | 73 ± 25 | 69 ± 4 | 90 ± 26 |
| **Condition 2: 160 ºC 1 h + 90 ºC - 3 h** | | | |
| Compound | M100 | TS | EB |
| DA4 | 66 ± 3 | 47 ± 11 | 77 ± 13 |
| DA5 | 73 ± 9 | 51 ± 16 | 68 ± 19 |
| **Condition 3: 160 ºC - 1 h + 90 ºC - 12 h (BEST CONDITION)** | | | |
| Compound | M100 | TS | EB |
| DA4 | 70 ± 3 | 51 ± 14 | 76 ± 9 |
| **DA5** | **77 ± 7** | **74 ± 5** | **83 ± 9** |

The results show that:

- Almost all dual compounds under any self-healing condition exhibit efficiencies above ~47-50%. This confirms the potential of the new strategy designed and followed,
- All compounds exhibit good elongation at break repairability, which ensures their high deformability after healing,
- As expected, the best self-healing conditions are achieved using the longest healing time.

Key result: development of dual crosslinked compounds with an outstanding mechanical performance (without fillers) and self-healing capacity.

As proof of the excellent self-healing performance of dual compounds, Figure 5 shows an image taken with an optical microscope showing the scar of the damaged area and the new area where one sample of DA5 failed during the tensile test, demonstrating that the "randomization" process (characteristic of a complete healing) did indeed occur.

Advantages: It has been possible to establish three necessary conditions to achieve self-healing in crosslinked systems:

- Dynamic but stable networks at room temperature that guarantee high mechanical performance under standard service conditions.
- A minimum amount of non-dynamic nets, if not totally avoidable. In this way the flow necessary to achieve self-healing would be guaranteed.
- an absolute compatibility between the self-healing conditions of the networks, in addition to the stability of the material.

The dual system DA5 based on DA chemistry + disulfide bonds manages to meet all the three conditions mentioned above, exceeding 5 MPa and 70% healing efficiency of TS and EB.

**EXAMPLE 2:** Comparative example with respect to a synthetic route where the DA network is missing

**Materials**

A compound called non-Furan DA5 was prepared, in which equivalent DA5 recipe was replicated, but eliminating the FA during mixing. In this sense, the DA reaction would not be completed. All the ingredients were incorporated in a conventional rubber mixing process in a single stage using a two-roll mill at room temperature. A single sulfur system (noted as SEV) was also considered for the comparison. Table 4 shows the compared recipes.

Table 4. Recipes of compared compounds in phr.

| Ingredients | SEV | DA5 | non-Furan DA5 |
|---|---|---|---|
| NR SOG 10 | 100 | 50 | 50 |
| ENR 50 | - | 50 | 50 |
| ZnO | 5 | 5 | 5 |
| SA | 2 | 2 | 2 |
| CBS | 2.50 | 2.50 | 2.50 |
| S | 1.25 | 1.25 | 1.25 |
| FA | - | 2.94 | - |
| DMI | - | 2.52 | 2.52 |
| BMI | - | 4.70 | 4.70 |

Curing curves were determined using a moving die rheometer (MDR 2000, Monsanto) with a 0.5° oscillation arc and 1.7 Hz frequency for 120 min. Vulcanization was performed by compression molding in a hydraulic press at 200 bar pressure during the optimum curing time (t90) determined by the curing curves of each compound at 160 °C.

**Results**

*Mechanical properties*

The uniaxial tensile mechanical properties of the compared compounds are shown in Table 5.

Table 5. Uniaxial tensile properties of compared compounds.

| Compound | M100 (MPa) | TS (MPa) | EB (%) |
|---|---|---|---|
| SEV | 0.42 ± 0.02 | 6.5 ± 0.9 | 984 ± 59 |
| DA5 | 0.9 ± 0.2 | 8.5 ± 0.7 | 875 ± 94 |
| Non-Furan DA5 | 0.18 ± 0.02 | 4.4 ± 0.4 | 971 ± 47 |

The following conclusions can be established according to the results of the non-Furan DA5:

- It presents the lowest mechanical properties, with M100, TS and EB being considerably worse than the DA5 dual compound. This demonstrates the synergistic character of the combination given by the presence of the furan groups (forming a Diels-Alder crosslinked network) and the semi-efficient sulfur network (generating poly- and di-sulfides crosslinking points).
- It exhibits the typical elastomeric behavior (as shown in Figure 6).
- The trend described by the stress-strain curve is quite close to the SEV, where the differences presented may be due to the extra presence of DMI and BMI that were kept in the recipe.

*Self-repairing performance*

The self-repairing protocol was carried out following pre-optimized conditions for the SEV and DA5 systems. For

the first, the damaged samples were subjected to a protocol of 160 °C for 1 h and 200 bar pressure to ensure the disulfide exchange reaction. For the DA5 dual system, a combined protocol of 160 °C for 1 h and 200 bar pressure was required for the same purpose than SEV, in addition to the promotion of the retro Diels-Alder reaction and followed by 90 °C for 12 h and 200 bar pressure for the Diels-Alder reaction. The same protocol for DA5 was used for non-Furan DA5. Table 6 shows the healing efficiencies values based on the recovery of M100, TS and EB.

Table 6. Self-healing efficiencies of the compared compounds.

| **Compound** | **Healing efficiency** (%) | | |
|---|---|---|---|
| | M100 | TS | EB |
| SEV | 116 ± 10 | 43 ± 27 | 57 ± 37 |
| **DA5** | **77 ± 7** | **74 ± 5** | **83 ± 9** |
| Non-FuranDA5 | 82 ± 2 | 59 ± 2 | 61 ± 8 |

From these results one can conclude:

- The highest healing efficiencies at the breaking point (TS and EB) are obtained in the original compound DA5, applying the new in-bulk mixing method proposed in the present invention.
- The efficiencies of the non-Furan DA5 compound are correlated to the SEV compound, as expected since the repair is only be promoted by the disulfide exchange reaction common to both compounds. The differences would be a consequence of the excess temperature and time applied to non-Furan DA5 (second stage of 90 °C for 12 h), which can enhance the chain mobility and improve the healing efficiency.

## Final conclusions

The following conclusions can be established:

- The grafting of the furan groups by means of the novel mixing method presented is essential to ensure the best mechanical performance with this combination of ingredients.
- Without the presence of furan groups, the self-healing capacity depends exclusively on the disulfide exchange reaction, which is not capable of reaching high repair efficiencies with this combination of ingredients and healing conditions.
- The excellent self-healing capacity of the DA5 compound is a consequence of the presence of the sulfur network and the crosslinking given by the formation of the Diels-Alder adduct, which are dynamic by nature.
- The results showcase the effectiveness of the proposed approach and highlight its potential in the field of self-healing materials, opening up new possibilities for innovation and advancement.

## Claims

**1.** A method for obtaining a self-repairing natural rubber matrix comprising:

a) treating a blend of natural rubber (NR) and epoxidized natural rubber (ENR) with furoic acid and dimethylimidazole to functionalize the ENR with furan groups and
b) the blend obtained in step a) is mixed with the following sulfur vulcanization additives: sulfur (S), zinc oxide, stearic acid and n-cyclohexyl-2-benzothiazolsulfenamide, and bismaleimide to obtain the unvulcanized self-repairing natural rubber.

**2.** The method, according to claim 1, wherein steps a) and b) are carried out absence of solvent, that is, in solid state.

**3.** The method, according to claim 1 or 2, wherein step a) is carried out at a temperature of 100 °C and for 25 min.

**4.** The method, according to any of previous claims, wherein the weight ratio NR:ENR used in step a) is 1:1.

**5.** The method, according to any of previous claims, wherein the stochiometric ratio of furoic acid and dimethylimidazole is 1:1.

6. The method, according to any of previous claims, wherein 1 unit of furoic acid is used per 25 to 50 epoxy units.

7. The method, according to any of previous claims, wherein step b) is carried out at room temperature.

8. The method, according to any of previous claims, wherein step b) is carried out for 15 min.

9. The method, according to any of previous claims, wherein bismaleimide is used in a proportion furoic acid: bismaleimide 2:1.

10. The method, according to any of previous claims, wherein the proportion of S, zinc oxide, stearic acid and n-cyclohexyl-2-benzothiazolsulfenamide used is: 1.25, 5, 2 and 2.50 parts per hundred rubbers (phr), respectively.

11. The method, according to any of previous claims, wherein said method comprises a step c) of vulcanization of the rubber obtained in step b).

12. The method, according to claim 11, wherein vulcanization is performed by compression molding in a hydraulic press at 100-300 bar pressure and at 160 °C.

13. Self-repairing process of the self-repairing natural rubber obtained in any of claims 11 to 12, wherein said process comprises heating the rubber at 160 °C for 1 h under 200 bar pressure following by heating at 90 °C for 12 h under 200 bar pressure.

14. Self-repairing natural rubber obtained by the method described in any of previous claims 11 to 12.

15. Use of the self-repairing or natural rubber matrix defined in claim 14 in the automotive industry.

16. Use, according to claim 15, for the manufacturing of tires and conveyor belts.

## Patentansprüche

1. Verfahren zum Erhalten einer selbstreparierenden Naturkautschukmatrix, umfassend:

   a) Behandeln einer Mischung aus Naturkautschuk (NR) und epoxidiertem Naturkautschuk (ENR) mit Furoesäure und Dimethylimidazol zur Funktionalisierung des ENR mit Furangruppen und
   b) Vermischen der in Schritt a) erhaltenen Mischung mit den folgenden Schwefelvulkanisationsadditiven: Schwefel (S), Zinkoxid, Stearinsäure und n-Cyclohexyl-2-benzothiazolsulfenamid sowie Bismaleimid, um den unvulkanisierten selbstreparierenden Naturkautschuk zu erhalten.

2. Verfahren nach Anspruch 1, wobei die Schritte a) und b) in Abwesenheit eines Lösungsmittels, d. h. im festen Zustand, durchgeführt werden.

3. Verfahren nach Anspruch 1 oder 2, wobei Schritt a) bei einer Temperatur von 100 °C und für 25 min durchgeführt wird.

4. Verfahren nach einem der vorhergehenden Ansprüche, wobei das in Schritt a) verwendete Gewichtsverhältnis NR:ENR 1:1 ist.

5. Verfahren nach einem der vorhergehenden Ansprüche, wobei das stöchiometrische Verhältnis von Furoesäure und Dimethylimidazol 1:1 ist.

6. Verfahren nach einem der vorhergehenden Ansprüche, wobei 1 Einheit Furoesäure pro 25 bis 50 Epoxideinheiten verwendet wird.

7. Verfahren nach einem der vorhergehenden Ansprüche, wobei Schritt b) bei Raumtemperatur durchgeführt wird.

8. Verfahren nach einem der vorhergehenden Ansprüche, wobei Schritt b) 15 Minuten lang durchgeführt wird.

9. Verfahren nach einem der vorhergehenden Ansprüche, wobei Bismaleimid im Verhältnis von 2:1 Furoesäure:Bismaleimid verwendet wird.

10. Verfahren nach einem der vorhergehenden Ansprüche, wobei das Verhältnis von S, Zinkoxid, Stearinsäure und n-Cyclohexyl-2-benzothiazolsulfenamid jeweils 1,25, 5, 2 und 2,50 Teile pro hundert Kautschuk (phr) beträgt.

11. Verfahren nach einem der vorhergehenden Ansprüche, wobei das Verfahren einen Schritt c) der Vulkanisation des in Schritt b) erhaltenen Kautschuks umfasst.

12. Verfahren nach Anspruch 11, wobei die Vulkanisation durch Formpressen in einer hydraulischen Presse bei einem Druck von 100-300 bar und einer Temperatur von 160 °C durchgeführt wird.

13. Selbstreparierender Prozess des in einem der Ansprüche 11 bis 12 erhaltenen selbstreparierenden Naturkautschuks, wobei der Prozess Erhitzen des Kautschuks auf 160 °C für 1 h unter einem Druck von 200 bar und anschließend Erhitzen auf 90 °C für 12 h unter einem Druck von 200 bar umfasst.

14. Selbstreparierender Naturkautschuk, der nach dem in einem der vorhergehenden Ansprüche 11 bis 12 beschriebenen Verfahren hergestellt wird.

15. Verwendung der in Anspruch 14 definierten selbstreparierenden oder natürlichen Kautschukmatrix in der Automobilindustrie.

16. Verwendung nach Anspruch 15 für die Herstellung von Reifen und Förderbändern.

## Revendications

1. Procédé d’obtention d’une matrice de caoutchouc naturel auto-réparatrice comprenant :

   a) le traitement d’ un mélange de caoutchouc naturel (NR) et de caoutchouc naturel époxydé (ENR) avec de l’acide furoïque et du diméthylimidazole pour fonctionnaliser l’ENR avec des groupes furane et
   b) le mélange obtenu à l’étape a) est mélangé avec les additifs de vulcanisation au soufre suivants : soufre (S), oxyde de zinc, acide stéarique et n-cyclohexyl-2-benzothiazolsulfénamide, et bismaléimide pour obtenir le caoutchouc naturel auto-réparateur non vulcanisé.

2. Procédé, selon la revendication 1, dans lequel les étapes a) et b) sont réalisées en l’absence de solvant, c’est-à-dire à l’état solide.

3. Procédé, selon la revendication 1 ou 2, dans lequel l’étape a) est réalisée à une température de 100°C et pendant 25 min.

4. Procédé, selon l’une quelconque des revendications précédentes, dans lequel le rapport en poids NR : ENR utilisé à l’étape a) est 1 :1.

5. Procédé selon l’une quelconque des revendications précédentes, dans lequel le rapport stœchiométrique de l’acide furoïque et du diméthylimidazole est 1 :1.

6. Procédé, selon l’une quelconque des revendications précédentes, dans lequel 1 unité d’acide furoïque est utilisée pour 25 à 50 unités d’époxy.

7. Procédé, selon l’une quelconque des revendications précédentes, dans lequel l’étape b) est réalisée à température ambiante.

8. Procédé, selon l’une quelconque des revendications précédentes, dans lequel l’étape b) est réalisée pendant 15 min.

9. Procédé selon l’une quelconque des revendications précédentes, dans lequel le bismaléimide est utilisé dans une proportion d’acide furoïque : bismaléimide 2 :1.

10. Procédé, selon l’une quelconque des revendications précédentes, dans lequel la proportion de S, d’oxyde de zinc,

d’acide stéarique et de n-cyclohexyl-2-benzothiazolsulfénamide utilisée est respectivement de : 1,25, 5, 2 et 2,50 parties pour cent parties de caoutchoucs (phr).

**11.** Procédé, selon l’une quelconque des revendications précédentes, dans lequel ledit procédé comprend une étape c) de vulcanisation du caoutchouc obtenu à l’étape b).

**12.** Procédé, selon la revendication 11, dans lequel la vulcanisation est réalisée par moulage par compression dans une presse hydraulique à une pression de 100 à 300 bars et à 160 °C.

**13.** Procédé d’auto-réparation du caoutchouc naturel auto-réparateur obtenu selon l’une quelconque des revendications 11 à 12, dans lequel ledit procédé comprend le chauffage du caoutchouc à 160 °C pendant 1 h sous une pression de 200 bars, suivi d’un chauffage à 90°C pendant 12 h sous une pression de 200 bars.

**14.** Caoutchouc naturel auto-réparateur obtenu par le procédé décrit dans l’une quelconque des revendications précédentes 11 à 12.

**15.** Utilisation de la matrice de caoutchouc auto-réparatrice ou naturelle définie dans la revendication 14 dans l’industrie automobile.

**16.** Utilisation, selon la revendication 15, pour la fabrication de pneus et de bandes transporteuses.

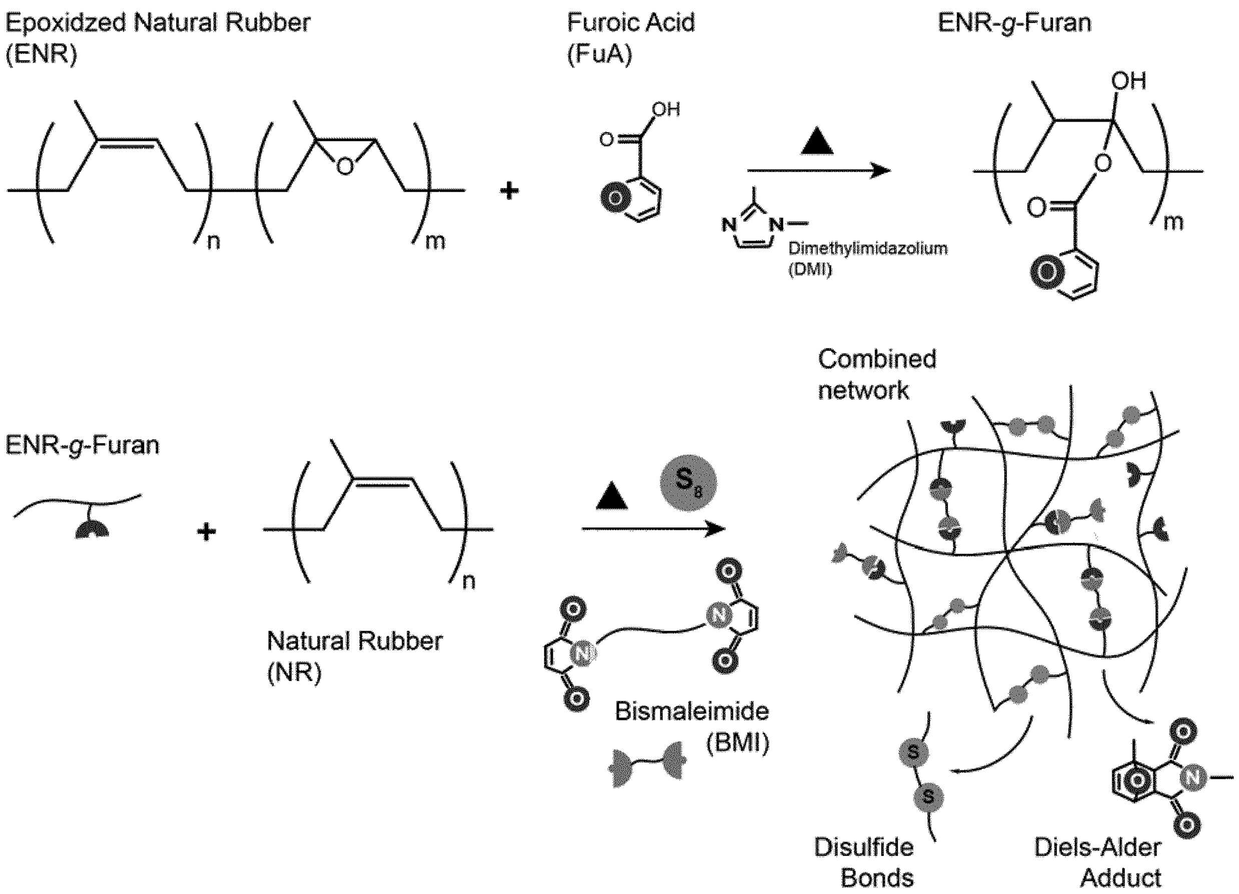
Epoxidzed Natural Rubber
(ENR)
Furoic Acid
(FuA)
ENR-*g*-Furan
Dimethylimidazolium
(DMI)
ENR-*g*-Furan
Natural Rubber
(NR)
Bismaleimide
(BMI)
Combined
network
Disulfide
Bonds
Diels-Alder
Adduct

**Fig. 1**

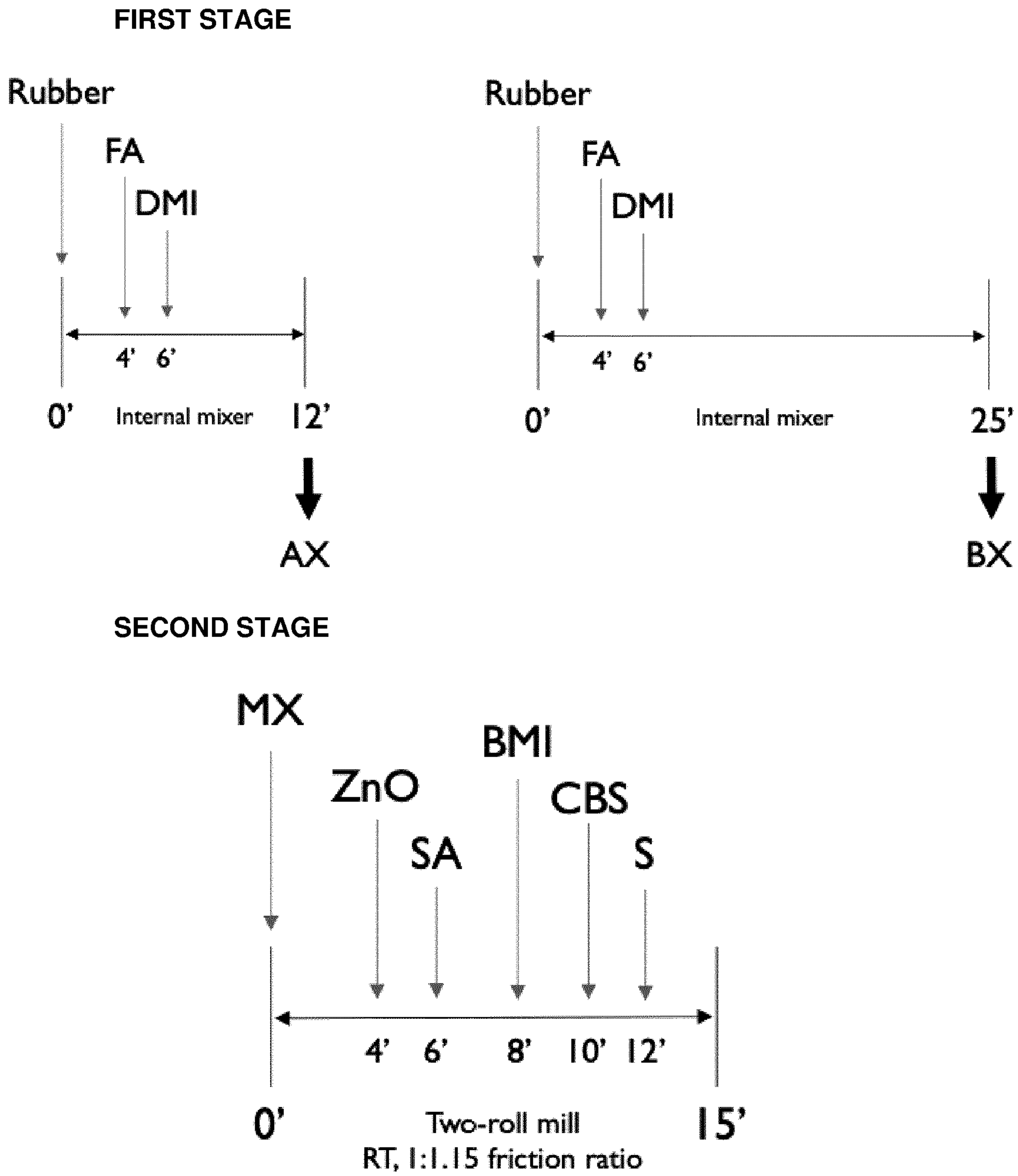
FIRST STAGE
Rubber
FA
DMI
4'
6'
0'
Internal mixer
12'
AX
Rubber
FA
DMI
4'
6'
0'
Internal mixer
25'
BX
SECOND STAGE
MX
ZnO
SA
BMI
CBS
S
4'
6'
8'
10'
12'
0'
Two-roll mill
RT, 1:1.15 friction ratio
15'

Fig. 2

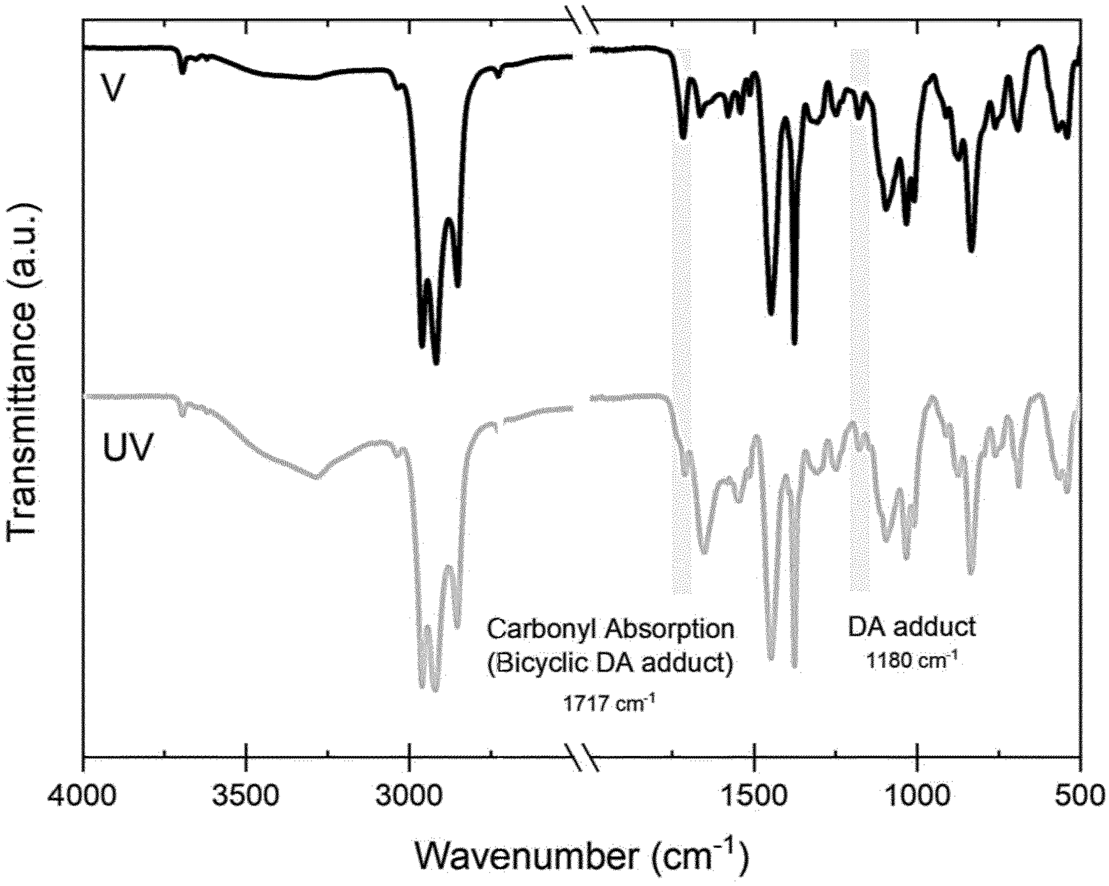
V
UV
Transmittance (a.u.)
Carbonyl Absorption
(Bicyclic DA adduct)
1717 cm-1
DA adduct
1180 cm-1
4000
3500
3000
1500
1000
500
Wavenumber (cm-1)

Fig. 3

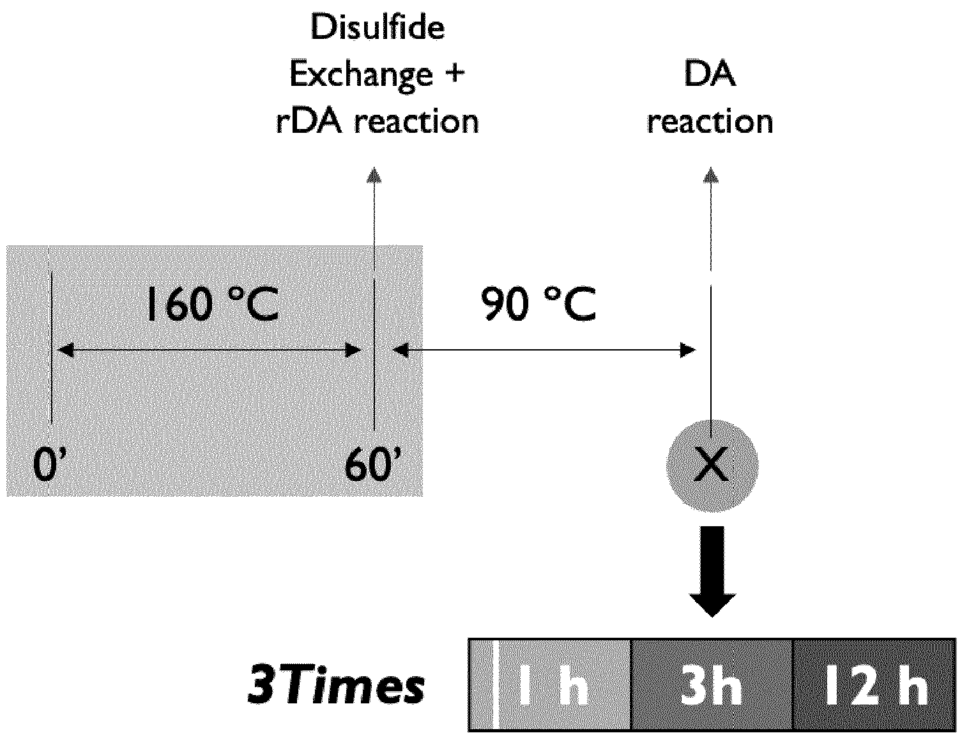
Disulfide
Exchange +
rDA reaction
DA
reaction
160 °C
90 °C
0'
60'
3Times
1 h
3h
12 h

Fig. 4

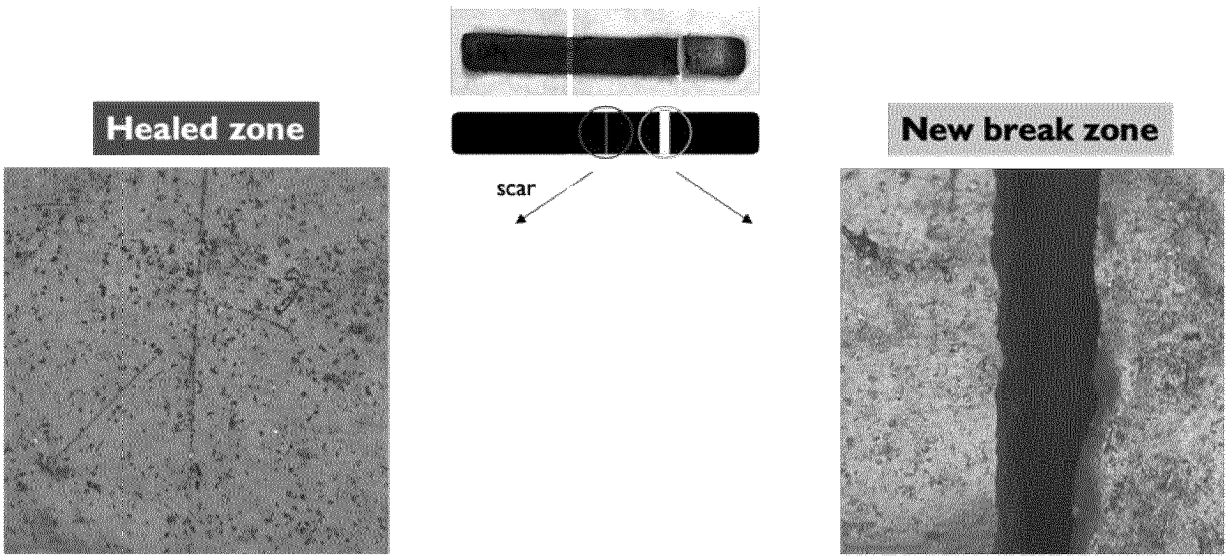
Healed zone
scar
New break zone

Fig. 5

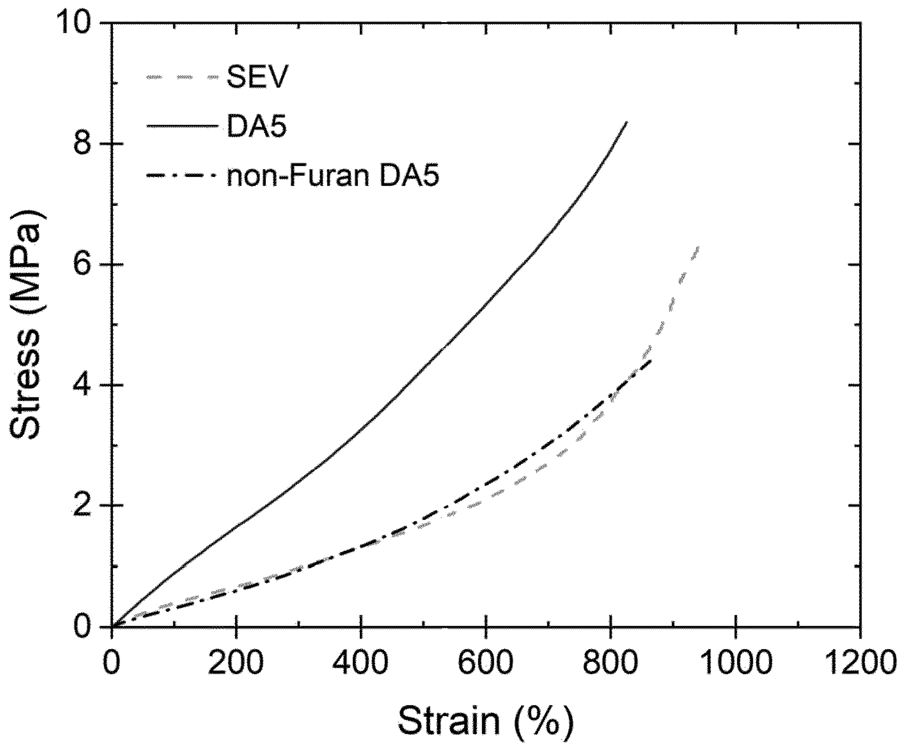
10
8
6
4
2
0
Stress (MPa)
0
200
400
600
800
1000
1200
Strain (%)
SEV
DA5
non-Furan DA5

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ARAUJO-MORERA, J.** ; **VERDEJO, R.** ; **LÓPEZ-MANCHADO, M.A.** ; **SANTANA, M.H.** Sustainable Mobility: The Route of Tires through the Circular Economy Model. *Waste Management*, 2021, vol. 126, 309-322
- **WANG, S.** ; **URBAN, M.W.** Self-Healing Polymers. *Nat Rev Mater*, 2020, vol. 5, 562-583
- **UTRERA-BARRIOS, S.** ; **VERDEJO, R.** ; **LOPEZ-MANCHADO, M. A.** ; **HERNÁNDEZ SANTANA, M.** Evolution of self-healing elastomers, from extrinsic to combined intrinsic mechanisms: A review. *Materials Horizons*, 2020, vol. 7 (11), 2882-2902
- **ARAUJO-MORERA, J.** ; **LÓPEZ-MANCHADO, M.A.** ; **VERDEJO, R.** ; **HERNÁNDEZ SANTANA, M.** Unravelling the Effect of Healing Conditions and Vulcanizing Additives on the Healing Performance of Rubber Networks. *Polymer (Guildf)*, 2022, vol. 238, 124399
- **MIWA, Y.** ; **KURACHI, J.** ; **SUGINO, Y.** ; **UDAGAWA, T.** ; **KUTSUMIZU, S.** Toward Strong Self-Healing Polyisoprene Elastomers with Dynamic Ionic Crosslinks. *Soft Matter*, 2020, vol. 16, 3384-3394
- **ZHOU, X.** ; **WANG, H.** ; **LI, S.** ; **LIU, M.** Synthesis and Application of Self-Healing Elastomers with High Healing Efficiency and Mechanical Properties Based on Multi-Healing Systems. *Eur Polym J*, 2021, vol. 159, 110769
- **PIRE, M.** ; **OIKONOMOU, E.K.** ; **IMBERNON, L.** ; **LORTHIOIR, C.** ; **ILIOPOULOS, I.** ; **NORVEZ, S.** Crosslinking of Epoxidized Natural Rubber by Dicarboxylic Acids: An Alternative to Standard Vulcanization. *Macromol Symp*, 2013, vol. 331-332, 89-96
- **BRYDSON, J.A.** Rubbery Materials and Their Compounds. Springer, 1988
- **UTRERA-BARRIOS, S.** ; **VERDEJO, R** ; **LÓPEZ-MANCHADO, M.Á.** ; **HERNÁNDEZ SANTANA, M.** The Final Frontier of Sustainable Materials: Current Developments in Self-Healing Elastomers. *Int J Mol Sci*, 2022, vol. 23, 4757
- **PIRE, M.** ; **OIKONOMOU, E.K.** ; **IMBERNON, L** ; **LORTHIOIR, C.** ; **ILIOPOULOS, I.** ; **NORVEZ, S.** Crosslinking of Epoxidized Natural Rubber by Dicarboxylic Acids: An Alternative to Standard Vulcanization. *Macromol Symp*, 2013, vol. 331-332, 89-96
- *CHEMICAL ABSTRACTS*, 1314-13-2
- *CHEMICAL ABSTRACTS*, 7704-34-9
- *CHEMICAL ABSTRACTS*, 1739-84-0
- *CHEMICAL ABSTRACTS*, 13676-54-5